# EUROPÄISCHE PATENTSCHRIFT

(11) **EP 1 872 891 B1**
(45) Veröffentlichungstag und Bekanntmachung des Hinweises auf die Patenterteilung: **31.10.2012**
(21) Anmeldenummer: 05025523.1
(22) Anmeldetag: 23.11.2005
(51) Int. Cl.: B23K 9/04, C23C 4/12

(54) **Verfahren zur Herstellung von hochverschleißfesten Oberflächen durch Lichtbogenauftragsschweißung zur Herstellung einer Verschleißschutzplatte**
Method for producing highly wear-resistant surfaces for a wear plate by arc built-up welding
Méthode de fabrication de surfaces hautement résistantes à l'usure pour une plaque d'usure par soudage par rechargement à l'arc

(43) Veröffentlichungstag der Anmeldung: 02.01.2008
(73) Patentinhaber: MEC Holding GmbH, 65812 Bad Soden (DE)
(72) Erfinder: Seifahrt, Horst Dr. techn., Belmont-sur-Lausanne (CH)
(74) Vertreter: Staudt, Armin Walter

(56) Entgegenhaltungen:
- EP-A- 0 947 275
- WO-A2-2004/074535
- DE-A1- 3 613 389
- GB-A- 2 001 947
- US-A- 4 092 158

## Beschreibung

Die vorliegende Erfindung betrifft ein Verfahren zur Herstellung einer hochverschleißfesten Oberfläche auf einem metallischen Trägermaterial durch Lichtbogenauftragsschweißung zur Herstellung einer Verschleißschutzplatte mit hohem Hartstoffanteil in der Verschleißschutzschicht unter Einsatz eines pulvergefüllten Fülldrahtes als erster Komponente und eines pulverförmigen Schweißwerkstoffes als zweiter Komponente, welche mittels Lichtbogenschweißung unter Aufschmelzen sowohl des Fülldrahtes als auch des pulverförmigen Schweißwerkstoffes auf dem metallischen Trägermaterial aufgebracht und mit diesem oberflächlich unter Ausbildung einer verschleißfesten Legierungsschicht verbunden werden.

Dem stromführenden, die Elektrode bildenden Fülldraht wird dabei kontinuierlich und proportional zum Drahtvorschub unmittelbar vor dem aufschmelzenden Drahtende der pulverförmige Schweißwerkstoff direkt in den Wirkbereich des Lichtbogens als Schweißpulver zugeführt.

Derartige Auftragsschweißverfahren, bei denen in der Regel der Vorschubbewegung des Schweißdrahtes eine Pendelbewegung überlagert ist, sind dem Fachmann hinlänglich und seit langem bekannt und werden auch angewendet, sodass hier nicht weiter auf Details dieser Technik eingegangen werden muss. Solche hochverschleißfesten Beschichtungen werden an Bauteilen aller Art benötigt, deren Flächen oder auch nur Teilbereiche permanent hohen Verschleißbeanspruchungen durch abrasive oder erosive Beanspruchung oder sonstiger hoher Dauerbeanspruchungen im Betrieb ausgesetzt sind.

So geht etwa aus der DD 259 587 ein Verfahren zur Herstellung hochlegierter Eisenwerkstoffe durch Auftragsschweißung hervor, bei dem ein Pulverdraht als Verschleißschicht aufgetragen wird, dem in den Lichtbogen zusätzlich ein hochlegiertes Metallpulver zugegeben wird, das in der Regel auch schon relativ grobkörnige, harte Bestandteile, wie etwa Karbide, Boride, Nitride oder dergleichen enthält. Durch Verwendung eines Pulverschweißdrahtes wird der Energieeintrag gegenüber der Verwendung von massivem Schweißdraht etwas verringert, jedoch erfordert die Aufschmelzung der harten Bestandteile im Schweißpulver noch immer einen hohen Energieeintrag, weshalb die Aufschmelzung der harten Bestandteile meist nur oberflächlicher Art ist. Das Produkt ist eine Verschleißschutzschicht mit eingelagerten, grobkörnigen Hartstoffen, welche bei verschleißender Beanspruchung zum Ausbruch der groben Körner führt, und somit eine unbefriedigende Standzeit ergibt.

Aus der EP 0 947 275 A2 ist ein Verfahren zur Herstellung von hochverschleißfesten Oberflächen durch Lichtbogenauftragsschweißung unter Verwendung von zwei Auftragskomponenten bekannt. Die erste Aufträgskomponente ist ein die Elektrode bildender, stromführender, Röhrchendraht, der eine Legierungspulverfüllung enthält und relativ zur Substratfläche bewegt wird. Bei der Auftragsschweißung wird die zweite, pulverförmige Auftraqskomponente zugeführt, wobei deren Zusammensetzung der Gesamtzusammensetzung der ersten Auftragskomponente, bestehend aus Pulverfüllung und Mantel des Röhrchendrahtes, entspricht.

Auch aus DE 36 13 389 A1 ist ein Verfahren zur Herstellung einer verschleißfesten Oberfläche durch Lichtbogen-Auftragsschweißen bekannt, bei dem zur Bildung der Legierung ein Elektrodendraht und ein granuläres Metallfüllmaterial vorgesehen sind. Die erhaltene Legierung enthält primäre Carbide des Typs (Cr/Fe)₇C₃.

Darüber hinaus lehrt die US 4 092 158 A ein Pulverspritzverfahren zur Herstellung verschleißfester Oberflächen, bei dem das Pulver Eisen, Bor, Molybdän und/oder Wolfram umfasst. Es kann außerdem Carbid-bildende Elemente oder Verbindungen enthalten.

In der GB 2 001 947 A ist ein Verfahren zur Herstellung eines Pulvermaterials offenbart, wobei das Pulvermaterial zur Herstellung einer Schutzschicht durch Sprühen auf ein Substrat aufgebracht wird. Das Pulvermaterial umfasst kugelförmige Teilchen und Agglomerate, die in ihrem Inneren aus einem Cermet bestehen und einen Überzug aus Al₂O₃ und TiO₂-Al₂O₃-SiO2 aufweisen.

In der WO 2004/074535 A2 ist ein Lichtbogendraht-Spritzverfahren mit einem Kompositdraht aus metallischen und keramischen Komponenten offenbart, bei dem beide Komponenten zur chemischen Reaktion miteinander unter Bildung von intermetallischen Phasen und Keramiken geeignet sind. Ferner ist zur Reaktion mit der metallischen Komponente ein Trägergas vorgesehen, das mit der metallischen Komponente zu Oxiden, Carbonitriden und/oder Nitriden reagieren kann.

Der vorliegenden Erfindung liegt daher die Aufgabe zugrunde, eine Verschleißschutzschicht nach der eingangs geschilderten Technik zu schaffen, in welcher die Hartstoffe weitgehend homogen in erheblich feinerer Körnung und höherer Kornzahl vorliegen als bei Verschleißschutzschichten, welche nach den Verfahren des Standes der Technik hergestellt werden, womit eine erheblich verlängerte Standzeit der Verschleißschutzschicht erreicht wird.

Diese Aufgabe wird gemäß Anspruch 1 dadurch gelöst, dass die die Hartstoffe bildenden Elemente dem Fülldrahtpulver und dem pulverförmigen Schweißwerkstoff in elementarer Form oder in einer Verbindung zugesetzt werden und die gewünschten Hartstoffe aus diesen Elementarformen oder Verbindungen in Form von Mischphasen von Carboboriden oder Carbonitriden erst in der Schmelze während des Abkühlens gebildet werden, wobei der Hartstoffbildner Kohlenstoff als Graphit vorliegt.

Die Elemente, die sich in der flüssigen Schmelze zu den Hartstoffen verbinden, werden sowohl dem pulverförmigen Schweißwerkstoff als auch der Pulverfüllung des Fülldrahtes beigemengt. Dadurch bilden sich beim Abkühlen aus der Schmelze feinkörnigere Hartphasen, die eine gegenüber herkömmlichen grobkörnigeren Hartstoffen geringere Tendenz zum Ausbrechen bei Verschleißbeanspruchung besitzen.

Durch die geringere Korngröße bei gleich hohem Volumenanteil in der Legierung liegen die Hartstoffe zudem in einer wesentlich größeren Kornzahl vor, wodurch es zusätzlich zu einer erheblich erhöhten Verschleißfestigkeit bzw. Standzeit der Verschleißschutzschicht kommt. Abgesehen von einem eventuell vorhandenen geringen Anteil von Siliziumkarbiden befinden sich weder im Fülldrahtpulver noch im zugesetzten pulverförmigen Schweißwerkstoff vorgefertigte Hartstoffe.

Die Mischphasen aus Carboboriden, Carbonitriden werden gezielt in der Schmelze hergestellt. Diese Mischphasen weisen sogar teils höhere Härten als reine Karbide, Nitride, Boride oder Silizide auf. Kohlenstoff liegt als Graphit bevergugt sowohl im Fülldrahtpulver als auch im pulverförmigen Schweißwerkstoff vor.

In einer vorteilhaften Weiterbildung der Erfindung soll die Ausbildung einer Mischphase durch Bildung einer Legierung zwischen dem metallischen Trägermaterial und der verschleißfesten Oberflächenbeschichtung und damit verbunden die Ausbildung einer Zwischenschicht zwischen dem metallischen Trägermaterial und der Verschleißschutzschicht minimiert werden. Dies wird dadurch erreicht, dass der pulverförmige Schweißwerkstoff in Auftragsrichtung gesehen unmittelbar vor dem Fülldrahtende auf das metallische Trägermaterial aufgegeben wird. Durch den für die Aufschmelzung des pulverförmigen Schweißwerkstoffes benötigten Energieeintrag wirkt der pulverförmige Schweißwerkstoff wärmedämmend gegenüber dem metallischen Trägermaterial, wodurch dieses in einer geringeren Schichtstärke aufgeschmolzen wird. Dadurch verringert sich aber auch der Verdünnungseffekt des metallischen Trägermaterials auf die Verschleißschutzschicht, wodurch die Verschleißfestigkeit weiter erhöht wird.

In einer weiteren vorteilhaften Weiterentwicklung der Erfindung soll es bei einer Störung in der Zufuhr des pulverförmigen Schweißwerkstoffes oder im Fülldrahtvorschub zu keiner Veränderung in der Legierungszusammensetzung kommen. Dies wird dadurch erreicht, dass die Zusammensetzung des pulverförmigen Schweißwerkstoffes sowohl in Bezug auf seine Elemente als auch deren Massenäquivalent exakt der Gesamtzusammensetzung des Fülldrahtes, bestehend aus der Pulverfüllung und dem Röhrchenmantel entspricht. Dadurch wird bei einer Störung in der Zufuhr des pulverförmigen Schweißwerkstoffes oder im Fülldrahtvorschub verhindert, dass sich die Zusammensetzung der Legierungsschmelze verändern kann. Bei einer Störung in der Zufuhr des pulverförmigen Schweißwerkstoffes kommt es lediglich zu einer unerwünscht verstärkten Aufschmelzung des metallischen Trägermaterials, wodurch der vorhin erwähnte Verdünnungseffekt der Verschleißschutzschicht auftritt. Da jedoch die Korngröße und die Kornverteilung der aus der Schmelze auskristallisierten Hartstoffe im wesentlichen unverändert bleibt, bleibt auch der verbesserte Verschleißschutz trotz des Auftretens der erwähnten Störung in der Zufuhr des pulverförmigen Schweißwerkstoffes weitgehend erhalten.

Als Hartstoffbildner können Elemente der Gruppen IVb, Vb und Vlb des Periodensystems der Elemente, welche mit kleinatomigen Elementen wie C, N, B und Si Hartstoffe auszubilden vermögen, eingesetzt werden.

Carbonitride können sich dabei bilden, da die Auftragung mit dem Open-Arc Verfahren, bei dem kein Schutzgas verwendet wird, hergestellt wird. Bevorzugt setzt man - auch aus Kostengründen - Niob, Wolfram und/oder Vanadium ein.

Der Hartstoffbildner Bor liegt sowohl im Fülldrahtpulver als auch im pulverförmigen Schweißwerkstoff bevorzugt als Ferrobor vor. Lediglich dessen Konzentration ist im Fülldrahtpulver unterschiedlich zum pulverförmigen Schweißwerkstoff, da der pulverförmige Schweißwerkstoff durch Eisenpulverzusatz auf die chemische Zusammensetzung des Fülldrahtes gebracht werden muss, um den vorhin erwähnten Vorteil bei einer Störung in der Zufuhr des pulverförmigen Schweißwerkstoffes oder in der Fülldrahtzufuhr zu ermöglichen.

Hinzu kommt, dass lichtbogenstabilisierende Verbindungen nicht im pulverförmigen Schweißwerkstoff enthalten sind. Hauptanteil sowohl für die Pulverfüllung des Fülldrahtes als auch im pulverförmigen Schweißwerkstoff sind Ferrochrom und Ferroniob. Schließlich gibt man noch desoxydierende Produkte zur Vermeidung von Porosität in der Auftragung hinzu.

Falls geringe Mengen von Siliziumkarbid in der Verschleißschicht vorliegen sollen, versetzt man die Pulvermischungen mit Carborundum, da Siliziumkarbid sich nach dem erfindungsgemäßen Verfahren nicht aus der Schmelze bilden lässt.

Um ein vollständiges Aufschmelzen der Pulver bei geringstmöglichem Energieaufwand zu erreichen, werden sowohl das Pulver im Fülldraht als auch der separat zugesetzte pulverförmige Schweißwerkstoff in einer Korngröße von maximal 400 µm eingesetzt, wobei die Korngrößen beider Pulver im wesentlichen identisch sind.

Der wesentliche Vorteil des erfindungsgemäßen Verfahrens liegt darin, dass - mit Ausnahme von Carborundum - keine vorgefertigten Hartstoffe eingesetzt werden, welche wesentlich teurer sind, als die die Hartstoffe bildenden Elemente bzw. Verbindungen. Zudem liegen diese nicht in der gewünscht niedrigen Korngröße von maximal 400 µm vor. Es wäre zwar möglich, vorgefertigte Hartstoffe auf diese geringen Korngrößen zu brechen, doch würde dies einen unnötig hohen Kostenaufwand darstellen.

Ein zweiter wesentlicher Vorteil ist darin zu sehen, dass die sich in der Schmelze durch Reaktion der eingesetzten Elemente bzw. Verbindungen bildenden Hartstoffe beim Abkühlen aus der Schmelze in wesentlich geringerer Korngröße ausgeschieden werden, als dies beim zusetzen vorgefertigter Hartstoffe möglich wäre, und die Kornzahl entsprechend wesentlich höher ist. Daher kann nach dem erfindungsgemäßen Verfahren mit geringerem Kostenaufwand eine um ein Vielfaches bessere Verschleißschutzschicht hergestellt werden.

Zudem würde ein Zusatz vorgefertigter Hartstoffe zu einer unregelmäßigeren Verteilung in der Auftragung führen und somit einen ungleichen Widerstand gegen Verschleiß ergeben. Ob die Struktur solcher vorgefertigten Hartphasen beim Abkühlen in der Auftragung so fein bleibt wie die beim Abkühlen in der Auftragung entstehenden Hartphasen, ist zu bezweifeln.

Das gewünschte Gefüge der Verschleißschutzschicht soll nahezu porenfrei sein und auch keine ungelösten Partikel enthalten. Die Bildung von Rissen ist in Legierungen dieser Härte nicht zu vermeiden, die Risse können aber größer werden und zum Ausbrechen führen, wenn die ausgeschiedenen Hartphasen zu grob sind.

In der nach dem vorliegenden Verfahren hergestellten Verschleißschutzschicht wurden nur feine Risse festgestellt, die auch beim Trennen der Platte in die Gebrauchsstücke teilweise erst entstehen. Bei gleicher Zusammensetzung sind jedoch kleinere Karbide dichter verteilt, neigen weniger zum Ausbrechen und ergeben höhere Verschleißbeständigkeit, sowohl bei abrasivem Verschleiß als auch bei Erosion.

Die Gesamtstruktur der nach diesem Verfahren hergestellten Verschleißschutzschicht enthält viele kleine primäre Nb-reiche Karbide, ziemlich gleichmäßig verteilt in einer übereutektisch ledeburitischen, feinkristallinen Matrix mit primären M₇C₃ - Karbiden, sowie eutektischen Karbiden und Perlit. Es wurde kein Restaustenit festgestellt. Vereinzelt wurden einzelne Mikroporen und kleine Oxide beobachtet, jedoch konnte man praktisch keine ungelösten metallischen Partikel beobachten.

Die besonderen Vorteile der vorliegenden Erfindung gegenüber dem bekannten Stand der Technik liegen in der geringeren Aufmischung der Auftragsschicht mit dem metallischen Trägermaterial, in der geringeren Gefahr der Änderung der Zusammensetzung der Auftragsschicht bei Störungen in der Fülldrahtzufuhr oder in der Zufuhr des pulverförmigen Schweißwerkstoffes, vor allem aber in der verbesserten Struktur der Auftragsschicht und damit verbunden in der höheren Verschleißfestigkeit, die die Qualität der Verschleißplatte unterstreicht. Daneben sind aber auch wirtschaftliche Vorteile zu erwähnen. So sind bei einem Einsatz von über 40% an pulverförmigem Schweißwerkstoff große Einsparungen an dem zu verwendenden Fülldraht möglich, dessen Herstellungskosten erheblich über jenem des pulverförmigen Schweißwerkstoffes liegen.

## Patentansprüche

1. Verfahren zur Herstellung einer hochverschleißfesten Oberfläche auf einem metallischen Trägermaterial durch Lichtbogenauftragsschweißung zur Herstellung einer Verschleißschutzplatte mit hohem Hartstoffanteil in der Verschleißschutzschicht unter Einsatz eines pulvergefüllten Fülldrahtes als erster Komponente und eines pulverförmigen Schweißwerkstoffes als zweiter Komponente, welche mittels Lichtbogenschweißung unter Aufschmelzen sowohl des Fülldrahtes als auch des pulverförmigen Schweißwerkstoffes auf dem metallischen Trägermaterial aufgebracht und mit diesem oberflächlich unter Ausbildung einer verschleißfesten Legierungsschicht verbunden werden, **dadurch gekennzeichnet, dass** die die Hartstoffe bildenden Elemente dem Fülldrahtpulver und dem pulverförmigen Schweißwerkstoff in elementarer Form oder in einer Verbindung zugesetzt werden und die gewünschten Hartstoffe aus diesen Elementarformen oder Verbindungen in Form von Mischphasen von Carboboriden oder Carbonitriden erst in der Schmelze während des Abkühlens gebildet werden, wobei der Hartstoffbildner Kohlenstoff als Graphit vorliegt.

2. Verfahren nach Anspruch 1, **dadurch gekennzeichnet, dass** als Hartstoffbildner Elemente der Gruppen IVb, Vb und Vlb des Periodensystems der Elemente, welche mit kleinatomigen Elementen wie C, N, B und Si Hartstoffe auszubilden vermögen, eingesetzt werden, bevorzugt jedoch Nb, W und/oder V eingesetzt werden.

3. Verfahren nach Anspruch 1 oder 2, **dadurch gekennzeichnet, dass** der Hartstoffbildner Bor sowohl im Fülldrahtpulver als auch im pulverförmigen Schweißwerkstoff als Ferrobor vorliegt.

4. Verfahren nach einem der Ansprüche 1 bis 3, **dadurch gekennzeichnet, dass** im Fülldrahtpulver zusätzlich lichtbogenstabilisierende Verbindungen enthalten sind.

5. Verfahren nach einem der Ansprüche 1 bis 4, **dadurch gekennzeichnet, dass** der Hauptanteil sowohl im Fülldrahtpulver als auch im pulverförmigen Schweißwerkstoff Ferrochrom und/oder Ferroniob sind und in beiden Komponenten noch desoxydierende Produkte zur Vermeidung von Porosität in der Auftragung und zur besseren Lichtbogenstabilität enthalten sind.

6. Verfahren nach einem der Ansprüche 1 bis 5, **dadurch gekennzeichnet, dass** abgesehen von eventuell vorhandenen geringen Mengen von Siliziumkarbid in Form von Carborundum, keine weiteren vorgefertigten Hartstoffe im Fülldraht und im pulverförmigen Schweißwerkstoff vorhanden sind.

7. Verfahren nach einem der Ansprüche 1 bis 6, **dadurch gekennzeichnet, dass** der pulverförmige Schweißwerkstoff in Auftragsrichtung gesehen unmittelbar vor dem aufzuschmelzenden Fülldrahtende auf das metallische Trägermaterial aufgegeben wird.

8. Verfahren nach einem der Ansprüche 1 bis 7, **dadurch gekennzeichnet, dass** bis zu 50% der Auftragsschicht in Form von pulverförmigem Schweißwerkstoff als zweiter Auftragskomponente aufgetragen wird.

9. Verfahren nach einem der Ansprüche 1 bis 8, **dadurch gekennzeichnet, dass** die Zusammensetzung des pulverförmigen Schweißwerkstoffes exakt der Gesamtzusammensetzung des Fülldrahtes, bestehend aus Pulverfüllung und Röhrchenmantel entspricht.

10. Verfahren nach einem der Ansprüche 1 bis 9, **dadurch gekennzeichnet, dass** sowohl das Pulver im Fülldraht als auch der separat zugesetzte pulverförmige Schweißwerkstoff in einer Korngröße von maximal 400 µm eingesetzt werden, wobei die Korngrößen beider Pulver im wesentlichen identisch sind.

## Claims

1. Method for the production of a highly wear-resistant surface on a metallic substrate by an arc welding process for the production of a wear protection plate with high hard material content in the wear protection layer, using a powder-cored filler wire as the first component and a powdered welding material as the second component, which, by melting during arc welding, applies both the cored filler wire and the powdered welding material to the metallic substrate and bonds them to the surface by forming a wear-resistant alloy weld deposit, **characterised in that** that the elements creating the hard alloy are added to the filler wire powder and the powdered welding material in the elemental form or as a compound, and the desired hard weld deposit is only formed from these elemental forms or compounds in the form of mixed phases of carboborides or carbonitrides in the smelt during solidification and cooling, whereby the hardness-determinant carbon is present as graphite.

2. Method according to Claim 1, **characterised in that** that elements of the Groups IVb, Vb and Vlb of the Periodic Table of the Elements, which can form hard compounds with elements with small atoms, such as C, N, B and Si, are formulated to increase the hardness, preferably, however, with the use of Nb, W and/or V.

3. Method according to Claim 1 or 2, **characterised in that** that the hardness-determinant boron is formulated in both the filler wire powder and the powdered welding material as ferroboron.

4. Method according to any one of the Claims 1 to 3, **characterised in that** that welding arc stabilising compounds are also formulated in the filler wire powder.

5. Method according to any one of the Claims 1 to 4, **characterised in that** that the major portions in both the filler wire powder and the powdered welding material are ferrochromium and/or ferroniobium, and that deoxidising compounds are formulated in both components to avoid porosity in the application and for better welding arc stability.

6. Method according to any one of the Claims 1 to 5, **characterised in that** that, apart from the possibility of the presence of small amounts of silicon carbide in the form of carborundum, no other prefabricated hard materials are present either in the cored filler wire or in the powdered welding material.

7. Method according to any one of the Claims 1 to 6, **characterised in that** that the powdered welding material is immediately applied to the metallic substrate ahead of the melting tip of the cored filler wire, seen from the direction of application.

8. Method according to any one of the Claims 1 to 7, **characterised in that** that up to 50% of the coating layer is applied in the form of powdered welding material as the second coating component.

9. Method according to any one of the Claims 1 to 8, **characterised in that** that the composition of the powdered welding material is exactly the same as the overall composition of the cored filler wire, consisting of powder filling and metallic sheath.

10. Method according to any one of the Claims 1 to 9, **characterised in that** that both the powder in the cored filler wire and the separately applied powdered welding material are used in a grain size of maximum 400 micron, whereby the grain sizes of the two powders are basically identical.

## Revendications

1. Procédé de fabrication d'une surface hautement résistante à l'usure sur un support métallique grâce à un rechargement par soudage à l'arc électrique en vue de la production d'une plaque de protection anti-usure avec un pourcentage important de substance dure dans la couche de protection anti-usure par utilisation d'un fil fourré de poudre en tant que premier composant et d'un matériau de soudage pulvérulent en tant que second composant, qui sont appliqués sur le support métallique en fusionnant sous l'effet de la soudure à l'arc électrique et sont reliés à la surface du support métallique par formation d'une couche d'alliage résistant à l'usure, **caractérisée en ce que** les éléments constituant les substances dures sont ajoutés, sous forme élémentaire ou sous forme combinée, à la poudre du fil fourré et au matériau de soudage pulvérulent et que les substances dures souhaitées à partir de ces formes élémentaires ou combinées ne se forment dans la masse fondue sous forme de phases de mélange des carboborides ou des carbonitrides que durant le refroidissement, phase au cours de laquelle l'agent formateur des substances dures qu'est le carbone est présent sous forme de graphite.

2. Procédé selon la revendication 1, **caractérisé en ce qu'**on utilise des éléments des groupes IVb, Vb et Vlb de la table périodique des éléments en tant qu'agents formateurs des substances dures, et de préférence Nb, W et/ou V, qui, associés à des éléments atomiques plus petits comme C, N, B et Si, permettent de former des substances dures.

3. Procédé selon l'une des revendications 1 ou 2, **caractérisé en ce que** l'agent formateur des substances dures, le bore, est présent sous forme de ferrobore aussi bien dans la poudre du fil fourré que dans le matériau de soudage pulvérulent.

4. Procédé selon l'une des revendications 1 à 3, **caractérisé en ce que** la poudre du fil fourré contient en plus des composés pour la stabilisation de l'arc électrique.

5. Procédé selon l'une des revendications 1 à 4, **caractérisé en ce que** le ferrochrome et/ou le ferroniobium constitue l'élément principal contenu aussi bien dans la poudre du fil fourré que dans le matériau de soudage pulvérulent et que les deux composants contiennent aussi des produits de désoxydation pour empêcher la porosité lors de l'application et pour une meilleure stabilité de l'arc électrique.

6. Procédé selon l'une des revendications 1 à 5, **caractérisé en ce qu'**à l'exception de petites quantités de carbure de silicium sous forme de carborundum éventuellement présentes, il n'y a aucune autre substance dure préfabriquée dans le fil fourré et dans le matériau de soudage pulvérulent.

7. Procédé selon l'une des revendications 1 à 6, **caractérisé en ce que**, si l'on considère le sens de l'application, le matériau de soudage pulvérulent est placé directement devant l'extrémité du fil fourré à faire fondre sur le support métallique.

8. Procédé selon l'une des revendications 1 à 7, **caractérisé en ce que** jusqu'à 50 % de la couche d'application soit appliquée sous la forme du matériau de soudage pulvérulent en tant que second composant d'application.

9. Procédé selon l'une des revendications 1 à 8, **caractérisé en ce que** la composition du matériau de soudage pulvérulent correspond exactement à la composition totale du fil fourré, qui est constitué d'un fourrage en poudre et une enveloppe sous forme de tube.

10. Procédé selon l'une des revendications 1 à 9, **caractérisé en ce que** la poudre du fil fourré ou du matériau de soudage pulvérulent distinct doit avoir un grain d'au maximum 400 µm de diamètre ; les diamètres de grain des deux poudres étant pour l'essentiel identiques.
